# FASCICULE DE BREVET EUROPEEN

(11) **EP 1 427 672 B1**
(45) Date de publication et mention de la délivrance du brevet: **11.11.2015**
(21) Numéro de dépôt: 02798772.6
(22) Date de dépôt: 19.09.2002
(51) Int. Cl.: C01G 23/00, C01G 21/00, C01G 25/00, C04B 35/491, C04B 35/624, C04B 35/622

(54) **PROCEDE DE PREPARATION D'UN SOL STABLE DE ZIRCONO-TITANATE DE PLOMB ET PROCEDE DE PREPARATION DE FILMS A PARTIR DUDIT SOL**
VERFAHREN ZUR HERSTELLUNG EINES STABILEN BLEIZIRKONTITANATSOL UND VERFAHREN ZUR HERSTELLUNG VON SCHICHTEN AUSGEHEND VON DIESEM SOL
METHOD FOR PREPARING A STABLE LEAD ZIRCON-TITANATE SOL AND METHOD FOR PREPARING FILMS BASED ON SAME

(30) Priorité: 20.09.2001 FR 0112145
(43) Date de publication de la demande: 16.06.2004
(73) Titulaire: Commissariat à l'Énergie Atomique et aux Énergies Alternatives, 75015 Paris (FR)
(72) Inventeur: BELLEVILLE, Philippe, F-37000 Tours (FR); BOY, Philippe, F-37300 Joue les Tours (FR); MONTOUILLOUT, Yves, F-14740 Bretteville l'Orgueilleuse (FR)
(74) Mandataire: Ahner, Philippe
(86) Numéro de dépôt international: PCT/FR2002/003206
(87) Numéro de publication internationale: WO 2003/024871

(56) Documents cités:
- WO-A1-90/13149
- US-A- 5 958 815
- AIYING W ET AL: "Processing and Seeding Effects on Crystallisation of PZT Thin Films from Sol-Gel Method" JOURNAL OF THE EUROPEAN CERAMIC SOCIETY, ELSEVIER SCIENCE PUBLISHERS, BARKING, ESSEX, GB, vol. 17, no. 12, 1997, pages 1443-1452, XP004097494 ISSN: 0955-2219
- LIVAGE ET AL.: "Glycol-based sol-gel process for the fabrication of ferroelectric PZT thin films" J. SOL-GEL SCI. TECH., vol. 2, 1994, pages 605-9, XP000463613
- TU Y L ET AL: "A study of the effects of process variables on the properties of PZT films produced by a single-layer sol-gel technique" JOURNAL OF MATERIALS SCIENCE, 15 MAY 1995, UK, vol. 30, no. 10, pages 2507-2516, XP002231150 ISSN: 0022-2461

## Description

### DOMAINE TECHNIQUE

La présente invention a trait à un procédé de préparation d'un sol de zircono-titanate de plomb (communément désigné par l'abréviation PZT) de formule PbZrₓTi₍₁₋ₓ₎O₃ avec 0,45≤x≤0,7.

L'invention concerne également un procédé de préparation de films PZT à partir dudit sol. Ces films en PZT sont connus, entre autres, pour leurs propriétés diélectriques, ferroélectriques et piézoélectriques et trouvent leur application dans le domaine de la microélectronique, en particulier dans la conception d'actuateurs et de capteurs, de dispositifs de mémoires non-volatiles et de capacités.

### ETAT DE LA TECHNIQUE ANTERIEURE

Il existe, dans la littérature de nombreuses descriptions de procédés de préparation de sols de PZT ainsi que des procédés de préparation de matériaux à base de PZT, sous forme de films, par la voie sol-gel.

Le document [1] : Integrated Ferroelectrics, 26, 1999, pp. 225-241 propose la synthèse d'un sol de PZT, permettant de préparer des empilements multi-couches d'épaisseur pouvant aller jusqu'à 5 micromètres avec des constantes diélectriques comprises entre 1100 et 1300. Cependant, la préparation dudit sol, à partir de propoxyde de zirconium ou de titane, s'accompagne quasi-systématiquement, selon les conditions opératoires exposées dans ce document, d'une formation de gels transitoires, ce qui génère, après traitement thermique, des films de mauvaise qualité. Ces films comportent, notamment, une phase cristalline intermédiaire du type pyrochlore, venant polluer la phase majoritaire pérovskite. Pour compenser la diminution du caractère diélectrique due notamment à cette phase intermédiaire, les auteurs sont amenés à réaliser des films d'épaisseur supérieure à 2 micromètres.

Ce type de réalisation, par conséquent, ne peut trouver d'applications dans le domaine des mémoires non volatiles, qui nécessitent des épaisseurs de films, de préférence, inférieures à 0,2 micromètres.

Les références [2] : Journal of sol-gel science and technology, 2, 1994, pp.605-609, [3] : J.Mater.Res.,1996,11, N°10, pp.2556-2564, [4] : J.Mater.Res., 1999, 14, N°5, pp.1852-1859 décrivent la préparation de sols de PZT destinés à la fabrication de films, la préparation s'effectuant dans des diols. Toutefois, la préparation de tels sols, selon les conditions opératoires explicitées dans ces documents, ne permet pas d'obtenir à partir de ceux-ci des films minces dont les performances sont répétables et reproductibles. Ces modes de préparation ne peuvent donc trouver leur application dans la production industrielle de dispositifs électroniques, nécessitant l'utilisation de matériaux à base de PZT.

La référence [5] : Journal of sol-gel science and technology, 2000, 19, pp.671-676 examine la stabilité sur une période d'un an d'un sol de PZT, destiné à la préparation de films minces présentant des propriétés électriques intéressantes, telles que des constantes diélectriques de l'ordre de 1500. Les auteurs mettent en avant l'utilisation de l'acétone comme solvant responsable d'une stabilité à long terme du sol. Toutefois, l'étude du suivi de viscosité a laissé apparaître une évolution telle que l'épaisseur des films générés dans les mêmes conditions augmente de près de 14 % dans un intervalle de vieillissement de l'ordre d'un an pour un sol donné. Cette variation d'épaisseur est incompatible avec la répétabilité nécessaire à un procédé de fabrication industrielle.

La référence [6] : Journal of Materials Science, 15-05-1995, vol. 30, no. 10 , p. 2507-2516, décrit un procédé de préparation d'un sol de zircone-titanate de plomb, comprenant successivement les étapes suivantes
a) un sol concentré (1,1 à 1,6 M) déshydraté est préparé dans du 1,3 propane diol, ledit sol comprenant l'acétate de plomb tri hydrate, le di-isopropoxyde bisacetylacetonate de titane et le n-propoxyde de zircone
b) le sol est stable pendant au moins 3 mois
c) les solutions mères sont diluées avec du n-propanol pour préparer des sols de 0,4 M jusqu'à 1 M
d) le sol est déposé sur un substrat de silicium par enduction centrifuge pour former une couche
e) la couche obtenue est séchée, ce qui a naturellement comme effet une gélification du sol
f) la couche est calcinée entre 300°C et 450°C pendant 1 à 60 minutes, ce qui est suffisant pour éliminer les produits organiques
g) la couche est recuite à 700°C pendant 5 à 60 minutes, ce qui est suffisant pour aboutir à la densification du revêtement

La référence [7] : WO9013149 A1 (Univ. Kingston (CA)), 01-11-1990, décrit un procédé de préparation d'un sol de zircone-titanate de plomb, comprenant successivement les étapes suivantes
a) un sol concentré est préparé dans de l'éthylène glycol, ledit sol comprenant l'acétate de plomb tri hydrate, l'isopropoxyde de titane et le n-propoxyde de zircone
b) le sol est une solution stable, parce que le sol est indiquée comme une solution "stock"
c) cette solution mère est diluée avec de propanol
d) le sol est déposé sur un substrat de silicium par enduction centrifuge ou trempage-retrait pour former une couche
e) la couche obtenue est séchée, ce qui a naturellement comme effet une gélification du sol
f) la couche est calcinée à 300-500°C
g) la couche est recuite à 600°C pendant 6 heures

Il existe donc un besoin pour un procédé de préparation de sols de PZT, qui permettrait d'obtenir des sols, qui présentent une stabilité à long terme, sans qu'interviennent de variations de leurs caractéristiques physico-chimiques (viscosité, état de condensation..etc) au cours du temps.

Il existe, en outre, un besoin pour un procédé de préparation de films à base de PZT, à partir de sols de PZT, qui permettrait d'obtenir des films présentant des performances électriques répétables et reproductibles.

### EXPOSÉ DE L'INVENTION

Le but de l'invention est donc de fournir un procédé de préparation de sols de PZT, qui réponde, entre autres, au besoin mentionné ci-dessus, qui ne présente pas les inconvénients, désavantages, défauts et limitations des procédés de préparation de l'art antérieur et qui résolve les problèmes inhérents aux procédés de préparation de l'art antérieur.

Le but de l'invention est encore de fournir un procédé de préparation de films PZT à partir dudit sol, qui soit entre autres, répétable et reproductible et d'une durée réduite, afin d'être applicable à une échelle industrielle.

Ce procédé doit permettre notamment l'obtention de constantes diélectriques élevées de 800-900 pour de très faibles épaisseurs de films de 150 à 220 nm.

Par répétabilité, on entend, selon l'invention, un procédé de réalisation de films, dont les propriétés électriques, entre autres, ne varient pas, lorsque lesdits films sont préparés à partir d'un même sol, à différents stades de vieillissement dudit sol.

Par reproductibilité, on entend, selon l'invention, un procédé de réalisation de films, dont les propriétés électriques, entre autres, ne varient pas, lorsque lesdits films sont préparés à partir de différents sols, réalisés en respectant les mêmes conditions opératoires.

Ce but et d'autres encore sont atteints, conformément à l'invention, par un procédé de préparation d'un sol de zircono-titanate de plomb, dit PZT de formule PbZrₓTi₍₁₋ₓ₎O₃ avec 0,45≤x≤0,7 comprenant successivement les étapes mentionnées à la revendication 1.

En d'autres termes, selon le procédé de préparation de l'invention, on prépare, dans un premier temps, un sol présentant une première concentration, par mélange dans un diol d'un précurseur à base de plomb, d'un précurseur à base de zirconium et d'un précurseur à base de titane. On note que les précurseurs, avant mélange dans le diol, peuvent être éventuellement préalablement solubilisés dans un solvant identique ou différent dudit diol, ce solvant devant être miscible avec ledit diol. Dans un deuxième temps, le sol ainsi obtenu est placé à température ambiante sans agitation, et on mesure la viscosité de ce sol en fonction du temps. Une fois que l'on constate que la viscosité se stabilise à une valeur sensiblement constante, on dilue enfin le sol avec un solvant compatible avec le diol utilisé dans la première étape, ledit sol résultant de la dilution présentant une deuxième concentration inférieure à la première concentration évoquée ci-dessus.

Par solvant compatible, on entend, selon l'invention, un solvant identique au diol utilisé dans l'étape a), ce solvant devant être miscible avec le diol utilisé dans l'étape a) du procédé.

Par température ambiante, on entend, selon l'invention, une température correspondant au milieu environnant, dans lequel est effectuée la préparation, cette température correspondant sous les latitudes tempérées à une température moyenne de 20°C. En d'autres termes, cela signifie que l'étape b) ne nécessite pas de chauffage externe.

On précise que, selon l'invention, les concentrations seront exprimés, en équivalent massique PZT, c'est-à-dire en pourcentage massique de produit de formule PbZrₓTi₍₁₋ₓ₎O₃ par rapport à la masse totale du sol.

On précise que, selon l'invention, on entend par valeur constante une valeur sensiblement constante.

Ce procédé présente l'avantage de présenter une étape de stabilisation du sol de PZT (correspondant à l'étape b). Cette stabilisation du sol est due notamment au fait de placer le sol préparé à l'étape a) à température ambiante sans agitation pendant une durée adéquate allant de 1 à 5 semaines pour obtenir une stabilisation de la viscosité dudit sol. Cette étape correspond à un mûrissement dudit sol concentré. Pendant cette phase de mûrissement, les précurseurs métalliques solubilisés (c'est-à-dire les précurseurs à base de plomb, de titane et de zirconium) condensent et se polymérisent jusqu'à un état d'équilibre. Cette polymérisation se traduit par une augmentation de la viscosité du sol, jusqu'à atteindre une valeur constante en fonction du temps, lorsque l'état d'équilibre est atteint. Cette phase de mûrissement est suivie, selon l'invention, d'une dilution, qui a pour effet de figer définitivement à une valeur de viscosité le sol résultant en garantissant ainsi une reproductibilité des dépôts de couches, à partir de sols réalisés dans les mêmes conditions opératoires ainsi qu'une répétabilité des dépôts de couches, du fait de la stabilité du sol obtenu par le procédé. Le non-respect de cette phase de mûrissement se traduit, notamment, par une viscosité apparente du sol dilué, de manière prématurée, peu distincte de celle d'un sol dilué après respect de cette phase. Toutefois, lors du dépôt d'un sol peu mûri (c'est-à-dire un sol, pour lequel la phase de mûrissement du procédé de l'invention ou étape b n'a pas été respecté) sous forme de couches minces, il a été constaté que les épaisseurs générées sont moindres, par rapport à celles obtenues avec un sol mûri conformément à l'invention dilué de la même façon. En effet, le sol peu mûri présente de manière inéluctable, des espèces à plus faible degré de condensation/ramification que le sol mûri.

L'invention concerne également un procédé de préparation de films de zircono-titanate de plomb, (dit PZT), de formule PbZrₓTi₍₁₋ₓ₎O₃ avec 0,45≤x≤0,7, qui comprend, après les étapes a), b) et
c) mentionnés dans la revendication 12, successivement :
d) une étape de dépôt d'au moins une couche, du sol sur un substrat, ledit sol étant obtenu à l'issue de l'étape c) ;
e) une étape de séchage de la, au moins, une couche pendant une durée et une température efficaces pour permettre une gélification totale du sol ;
f) une étape de calcination de la, au moins, une couche à une température et une durée efficaces pour éliminer des produits organiques issus de la préparation du sol ;
g) une étape de recuit à une température et une durée efficace pour aboutir à une densification de la, au moins une, couche.

Par produits organiques, on entend, selon l'invention, les résidus de solvant issus de la préparation du sol, les espèces organiques issues de la réaction des précurseurs métalliques entre eux.

Ce procédé de fabrication de films PZT présente l'avantage d'être un procédé reproductible, c'est à dire donnant toujours les mêmes performances diélectriques de films pour les mêmes conditions de fabrication du sol, et d'être un procédé répétable, c'est à dire reproductible dans le temps grâce à l'utilisation d'un sol mixte stabilisé. Le sol mixte issu du procédé décrit précédemment, dont les caractéristiques physico-chimiques (viscosité, état de condensation des espèces moléculaires en solution, etc) restent uniformes en fonction du temps, garantit une reproductibilité et une répétabilité des épaisseurs déposées sur substrat. Par conséquent, ce procédé, qui ne nécessite pas de réajustement des paramètres de fabrication pour garantir un résultat reproductible ou répétable, peut tout à fait s'envisager à un niveau industriel.

D'autres caractéristiques et avantages de l'invention apparaîtront mieux à la lecture de l'exposé détaillé et à la lecture des exemples de réalisation de l'invention donnés bien entendu à titre illustratif et non limitatif, en référence aux dessins annexés.

### BRÈVE DESCRIPTION DES DESSINS.

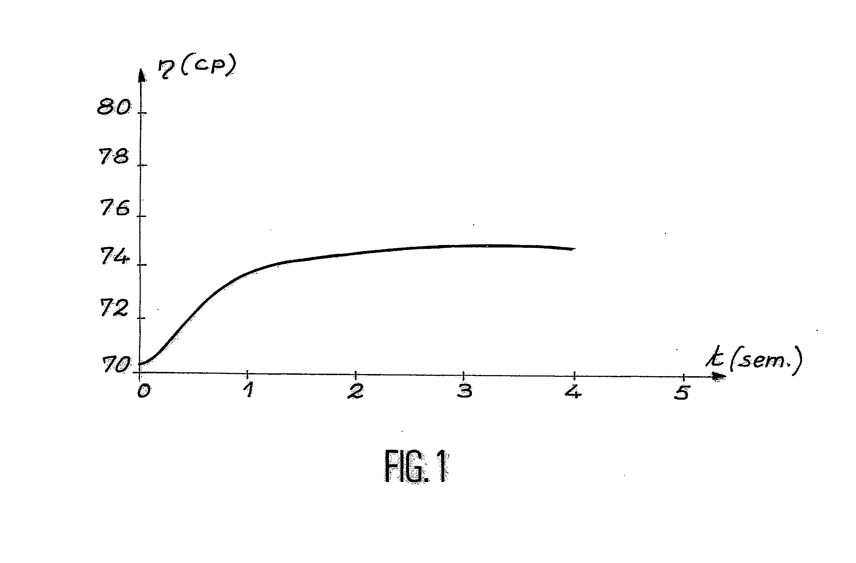

La figure 1 est un graphique, qui illustre les variations de la viscosité η (en centipoises cp) d'un sol de PZT (PbZr_{0.52}Ti_{0.48}O₃) concentré à 26 % en équivalent massique PZT (ledit sol résultant de l'étape a) du procédé) en fonction du temps t (en semaines), la mesure de viscosité étant prise à température ambiante.

### EXPOSÉ DÉTAILLÉ DE L'INVENTION.

Selon l'invention, le procédé de réalisation d'un sol de PZT comprend une succession d'étapes telles, qu'il permet d'obtenir, à son issue, un sol stable, dont les caractéristiques n'évoluent pas au cours du temps.

Pour ce faire, le procédé nécessite une première étape (étape a) de préparation d'un sol concentré dans un diol, par mélange dans ce diol d'un précurseur à base de titane, un précurseur à base de zirconium et un précurseur à base de plomb. La préparation de ce sol concentré peut être effectué par tout procédé connu. Par exemple un mode particulier de réalisation consiste à préparer un sol à base de plomb dans un diol, par dissolution d'un précurseur à base de plomb dans ce diol, auquel on ajoute un sol mixte à base de titane et de zirconium, ledit sol mixte pouvant être préparé par dissolution d'un précurseur à base de zirconium et d'un précurseur à base de titane dans le même diol ou dans un solvant compatible avec ledit diol, à savoir un solvant miscible avec ledit diol, comme c'est le cas des alcools en particulier le propanol. On précise, que le sol à base de plomb est, de préférence, initialement en excès de 10 % par rapport à la stoechiométrie, dans la mesure où on a constaté une perte d'oxyde de plomb du même ordre de grandeur lors du traitement thermique du sol de PZT déposé sous forme de couches. Le mélange desdits sols peut être ensuite porté à reflux, sous agitation, à une température avoisinant la température d'ébullition du mélange réactionnel. Le reflux permet d'assurer, avantageusement, une homogénéisation des sols mélangés entre eux. De préférence, le diol utilisé pour la préparation du sol mixte à base de précurseurs métalliques est un alkylène glycol, ayant un nombre d'atomes de carbone allant de 2 à 5. Ce type de solvant contribue à faciliter la solubilisation des précurseurs métalliques, notamment en jouant un rôle de chélatant en venant compléter la sphère de coordination du plomb, du titane et du zirconium.

Selon un mode particulier de réalisation de l'invention, le diol utilisé est l'éthylène glycol.

Selon l'invention, les précurseurs à base de plomb, de titane et de zirconium peuvent être de divers types, mais on préfère des précurseurs, qui sont disponibles dans le commerce et peu coûteux.

A titre d'exemple, on peut utiliser comme précurseur de plomb des sels organiques de plomb tels que des acétates, des sels minéraux de plomb tels que des chlorures ou encore des composés organométalliques du plomb comme des alcoolates comportant un nombre d'atomes de carbone allant de 1 à 4. De préférence, le précurseur de plomb utilisé, selon l'invention, est un sel organique hydraté tel que l'acétate de plomb trihydraté. Ce précurseur présente l'avantage d'être stable, très courant et bon marché. Toutefois, lors de l'utilisation d'un tel précurseur hydraté, il est préférable de procéder à une déshydratation de ce dernier. En effet, la présence d'eau lors du mélange des sols entre eux entraînerait une hydrolyse prématurée des précurseurs métalliques suivie d'une polymérisation. Il résulterait de cette étape de mélange non plus un sol mixte à base de plomb, titane et zirconium mais un produit de mélange résultant sous forme de gel et, par conséquent, une difficulté de déposer le gel ainsi produit sous forme de films.

Par exemple, la déshydratation de l'acétate de plomb trihydraté s'effectue par distillation de ce dernier dans le diol utilisé pour effectuer le mélange des sols.

De préférence, les précurseurs de titane sont des alcoxydes, tels que l'isopropoxyde de titane. De même, les précurseurs de zirconium sont préférablement des alcoxydes, tels que le n-propoxyde de zirconium.

On note, qu'à l'issue de cette étape de préparation du sol de PZT concentré (étape a), on peut obtenir, avantageusement, un sol dont la concentration est supérieure à 20 % en équivalent massique PZT, de préférence est de 20 à environ 40 % en équivalent massique PZT, par exemple 26 %.

Une fois le mélange des précurseurs métalliques effectué, le sol, obtenu à l'issue de la première étape de l'invention, subit une période dite de mûrissement. Cette période consiste à placer, comme nous l'avons explicité précédemment, le sol à température ambiante, sans agitation, jusqu'à obtention d'un sol présentant une viscosité constante en fonction du temps.

Le sol obtenu au cours de la première étape (étape a) est placé, à température ambiante, sans agitation, pendant une durée de 1 à 5 semaines.

Une fois la stabilisation de la viscosité du sol observé, ledit sol est amené à subir une dilution permettant d'accéder à des concentrations inférieures au sol concentré, ce qui facilite notamment l'utilisation ultérieure de ce sol. Ainsi, en partant d'un sol ayant une concentration supérieure à 20% en équivalent massique PZT, on peut diluer ainsi ledit sol, pour obtenir par exemple, un sol ayant une concentration de 1 à 20 % en équivalent massique PZT. Par exemple, en partant d'un sol concentré à 26 %, ledit sol résultant de la seconde étape du procédé, on peut diluer le sol de manière à obtenir un sol à 20% en équivalent massique PZT. Cette dilution, à un taux déterminé, permet d'une part de figer la viscosité à une valeur donnée et d'autre part d'utiliser ce sol pour effectuer, notamment des dépôts dudit sol sous forme de couches.

Selon l'invention, le solvant de dilution doit être compatible avec le solvant de préparation du sol concentré. Il est identique au solvant de préparation dudit sol. .

Selon l'invention, ce sol stable, préparé selon le procédé explicité précédemment, est destiné à être déposé sous forme de couches, pour constituer après un traitement adéquat un film de PZT présentant notamment des propriétés diélectriques intéressantes.

La première étape consiste à déposer sur un substrat le sol stabilisé, préparé selon le procédé précédemment décrit, sous forme d'au moins une couche.

Ce dépôt peut être effectué par toute technique permettant d'obtenir un dépôt sous forme de couches minces. Les épaisseurs de couches minces déposées, selon l'invention, peuvent aller de 10 à 100 nm.

De manière avantageuse, le dépôt est réalisé par la technique du trempage-retrait (appelée communément « dip-coating » en anglais) ou encore par la technique de l'enduction centrifuge (appelée communément « spin-coating » en anglais). Ces techniques facilitent, notamment, un contrôle des épaisseurs déposées et également l'ajustement de la microstructure (porosité, cristallinité...) des dépôts. En ce qui concerne la technique de l'enduction centrifuge, le substrat destiné au dépôt est plaqué sur un support tournant. Ensuite, l'on dépose un volume de sol permettant de recouvrir ledit substrat. La force centrifuge étale le sol sous forme d'une couche mince. L'épaisseur de la couche est notamment fonction de la vitesse de centrifugation et de la concentration du sol. Le paramètre de la concentration du sol en équivalent massique de PZT, étant fixé, l'homme du métier peut aisément choisir une vitesse de centrifugation voulue pour une épaisseur de couche désirée.

Selon l'invention, le substrat destiné au dépôt peut être de divers types, mais ne doit pas de préférence contaminer la couche déposée, par migrations d'ions par exemple, lors du traitement thermique et doit de préférence permettre une bonne adhérence de la couche. Sa température de ramollissement doit être supérieure à la température de traitements thermiques des couches déposées et son coefficient de dilatation thermique doit être compatible avec celui desdites couches pour limiter les effets de contrainte lors du recuit.

Selon l'invention, le substrat est de préférence une tranche de silicium. Ce type de substrat présente avantageusement une bonne planéité et un excellent état de surface et permet, notamment, des recuits à haute température, sans subir d'altérations.

Il peut, entre autres, présenter une couche de métallisation, lorsqu'il est, notamment, destiné à entrer dans la constitution de semi-conducteurs. Il peut également être orienté, tel qu'une orientation [111] par exemple. Ceci favorise notamment une orientation préférentielle des couches déposées.

Une fois le dépôt de sol effectué sous forme d'une couche mince, cette dernière subit, selon l'invention, une étape consistant en une étape de séchage de la couche déposée à une température et à une durée efficaces pour assurer une gélification de la couche. Cette étape est destinée à assurer l'évaporation d'une partie du solvant du type diol et d'une partie du solvant de dilution et éventuellement des produits secondaires, tels que des esters, issus des réactions entre les précurseurs métalliques. A l'issue de cette étape, le sol déposé est transformé totalement en une couche de gel d'épaisseur constante adhérant à la surface du substrat. La température et la durée efficaces pour assurer la gélification peuvent être déterminées aisément, par l'homme du métier, à l'aide, par exemple, de techniques de spectrophotométrie UV-visible.
Par exemple, l'étape de séchage, selon l'invention, peut être effectuée à température ambiante, pour une durée allant de 1 à 10 minutes.

Selon l'invention, le procédé de réalisation de films PZT comporte, à l'issue de l'étape de transformation en gel du sol déposé, un traitement thermique dudit gel.

Ce traitement thermique, selon l'invention, présente, en premier lieu, une étape de calcination effectuée à une température et une durée propres à éliminer les produits organiques issus de la préparation du sol. La température de calcination est choisie de manière à permettre l'élimination totale des composés organiques de la couche déposée et en particulier les solvants de préparation et de dilution du sol et les composés générés par la réaction des précurseurs métalliques entre eux. La température et durée efficaces peuvent être déterminées aisément par l'homme du métier grâce à des techniques telles que la spectroscopie IR (Infra-rouge). La température minimum de calcination correspond à une température permettant d'obtenir une couche exempte, notamment, de groupements hydroxyles. La disparition de tels groupements est vérifiable par spectroscopie infrarouge, notamment par disparition de la bande large à environ 3500 cm⁻¹. La température maximum de calcination correspond à une température permettant d'obtenir une couche ne contenant plus que des composés inorganiques, c'est-à-dire une couche dont le spectre infrarouge ne présente plus de bandes d'espèces carbonées.

La durée de calcination pour une température donnée, correspond à une durée permettant l'obtention d'une épaisseur de couche constante. L'épaisseur de couche est contrôlée, par exemple, par des techniques de spectrophotométrie UV. L'étape de calcination est arrêtée à l'obtention d'une couche homogène en épaisseur et exempt de composés organiques.

De préférence, l'étape de calcination s'effectue à une température allant de 300 à 500 °C et pour une durée allant de 2 à 15 minutes.

Le traitement thermique comprend, en second lieu, une étape de recuit à une durée et une température efficaces pour permettre la densification de la couche déposée. La densification de la couche correspond à l'obtention d'une couche d'épaisseur stabilisée et de structure cristallisée, du type pérovskite. La température et la durée de recuit sont choisies de manière à obtenir cette cristallisation, vérifiable aisément par analyse structurale, telle que l'analyse par diffraction des rayons X. De préférence, le recuit est effectué à une température allant de 600 à 800 °C pour une durée comprise entre 1 et 5 minutes.

Le recuit peut être effectué par différentes techniques. De préférence, le recuit est réalisé par un mode de chauffage rapide, obtenu, par exemple, avec la technique du « recuit thermique rapide » (communément désigné par l'abréviation RTA pour « Rapid Thermal Annealing »).

Selon l'invention, le film constitué par le dépôt d'au moins une couche, permet, à l'issue du traitement thermique du procédé, d'obtenir un film de PZT cristallisé dans un système unique correspondant au système pérovskite.

L'invention va maintenant être décrite en référence aux exemples suivants donnés à titre illustratif et non limitatif.

### EXEMPLE 1.

L'exemple qui suit illustre, dans un premier temps la préparation d'un sol de PZT de formule (PbZr_{0,52}Ti_{0,48}O₃) à partir d'un précurseur à base de plomb, l'acétate de plomb et à partir de précurseur de titane et de zirconium, sous forme d'alcoxydes.

Les alcoxydes de zirconium et de titane utilisés sont le n-propoxyde de zirconium commercial de concentration 70% en poids dans le propanol et l'isopropoxyde de titane. L'acétate de plomb est sous forme de trihydrate.

La viscosité est suivie à l'aide d'un viscosimètre à tube capillaire ou à cylindre tournant pour une température de 20°C.

Selon ce mode particulier de réalisation, la préparation dudit sol comporte une phase préliminaire de préparation d'un sol déshydraté à base de plomb.
a) Préparation du sol déshydraté à base de plomb.
   Dans un ballon surmonté d'un montage de distillation, on pèse 751,07 g (1,98 mol) d'acétate de plomb trihydraté et 330 g (5,32 mol) d'éthylène glycol. On homogénéise le mélange à 70 °C de manière à permettre une dissolution de l'acétate de plomb. La température de la solution homogène obtenue est alors augmentée pour déshydrater le précurseur à base de plomb par distillation. On recueille 120 g de distillat et la concentration en plomb du sol est de 2,06 mol/kg.
b) Préparation du sol stabilisé de formule Pb Zr_{0,52}Ti_{0,48}O₃.

Sous balayage d'argon, dans 264 g (330 ml) de n-propanol, on additionne sous agitation 225,13 g (0,792 mol) d'isopropoxyde de titane et on ajoute 401,52 g (0,858 mol) de n-propoxyde de zirconium à 70 % dans du n-propanol puis 458,7 g (412,5 ml) d'éthylène glycol. On laisse sous agitation 20 minutes à température ambiante.

Dans un tricol, on pèse 1.815 mol de sol de précurseur de plomb préalablement préparé soit un excès de 10 % pour pallier la perte d'oxyde de plomb (PbO) lors du traitement thermique des films. Sous courant d'argon, on additionne rapidement le sol à base de Ti/Zr sous forte agitation (600 t/min). A la fin de l'addition, on place un réfrigérant surmonté d'une garde dessicante et on arrête le balayage d'argon. On chauffe au reflux pendant 2 heures (101°C). Au cours de la montée en température, on diminue l'agitation à 250 tours/min. On obtient après reflux un sol mixte concentré qui a une concentration de 26 % en équivalent massique PZT. Le sol mixte est conservé à température ambiante sans agitation, jusqu'à obtention d'une viscosité constante en fonction du temps. Dans cet exemple de réalisation, le sol mixte est maintenu 1 semaine à température ambiante sans agitation. Ensuite, le sol mixte concentré est dilué à 20 % en équivalent massique PZT, soit à une concentration de 0.75 M, par addition d'éthylène glycol.

La figure 1 montre l'évolution en fonction du temps de la mesure thermostatée (à 20 °C) de la viscosité de la solution PZT à 26 % en masse (obtenu après la première étape du procédé). Ainsi, on observe sur la figure 1 une nette évolution de la viscosité du sol PZT, en fonction du temps. Cette évolution traduit, notamment, l'augmentation du degré de polymérisation des espèces en solution avec le temps de mûrissement. Au-delà d'une semaine de mûrissement, la viscosité du sol mixte tend à se stabiliser pour atteindre finalement une asymptote horizontale, correspondant à une viscosité constante de 74 centipoises. La solution peut alors être diluée (lors de la dernière étape du procédé), ce qui a pour effet de figer définitivement à une valeur de viscosité donnée la solution résultante.

Le procédé de préparation de sol selon la présente invention permet la préparation d'un sol très stable sur de très longues périodes.

Afin de mettre en évidence la stabilité des sols préparés selon la présente invention, des mesures de viscosité en fonction ont été effectués sur le sol préparé selon l'exemple 1.

Le sol obtenu après dilution selon l'exemple 1, présente une viscosité initiale de 33,4 centipoises (mesurée à 20°C). Une nouvelle mesure de viscosité de ce même sol a été effectuée après 12 mois de vieillissement. Il a été mesuré une viscosité de 33,25 centipoises (mesure effectuée dans les mêmes conditions qu'initialement), soit une évolution totalement négligeable et non significative. On peut par conséquent conclure à l'absence de modification chimique de la solution durant ce laps de temps et donc à une parfaite stabilité dans le temps des sols préparés selon le procédé de l'invention. La reproductibilité de ce résultat a été constatée sur deux préparations différentes, toutes les 2 réalisées selon le mode opératoire décrit ci-dessus.

### EXEMPLE 2.

Cet exemple illustre la préparation d'un film de PZT par dépôt sur un substrat de trois couches du sol préparé préalablement. Le substrat choisi est une tranche de silicium orienté [111] d'un diamètre de 12,5 à 15 cm, ladite tranche étant métallisée par pulvérisation avec une couche de platine d'une épaisseur allant de 100 nm à 200 nm servant d'électrode inférieure. La technique de dépôt utilisé, dans cet exemple, est l'enduction centrifuge, qui permet d'ajuster, pour un sol de concentration donnée, l'épaisseur déposée en choisissant la vitesse de rotation adéquate du dispositif. Les dépôts sont réalisés en zone à empoussièrement contrôlé afin de limiter la présence d'inclusions particulaires dans les films et en ambiance climatisée (température et hygrométrie contrôlées) afin de garantir la reproductibilité des conditions d'évaporation.

Le sol dilué à 20 % en masse de PZT est filtré sur filtre 0,2 µm préalablement au dépôt sur tranche. La vitesse de rotation, pour effecteur le dépôt, est ajustée à 4000 tours/min, afin d'obtenir une épaisseur finale par couche unitaire déposée allant de 60 à 70 nm.

La couche déposée est ensuite gélifiée par 8 minutes de séchage à température ambiante. Après le séchage et le chauffage du dépôt, la couche subit une calcination à une température de 300 °C pendant 15 minutes.

Après calcination, la couche déposée subit un traitement de densification par recuit sous atmosphère d'air, à une température de 800 °C pendant 5 minutes.

Dans cet exemple, l'opération de dépôt de couche suivi du traitement précédemment exposé est réitéré trois fois, afin d'obtenir un film d'une épaisseur de l'ordre de 195 nm.

Le film ainsi réalisé est un matériau céramique présentant une épaisseur de 195 nm et une constante diélectrique de 820.

L'analyse structurale aux rayons X du film préparé révèle l'obtention d'une phase cristalline unique pérovskite avec une orientation préférentielle correspondant à la direction [111] du substrat. Aucune phase parasite de type pyrochlore n'a jamais été détectée avec ce procédé de préparation.

### EXEMPLE 3.

Dans cet exemple, on étudie la reproductibilité du procédé de réalisation de films à base de PZT.

Afin de mettre en évidence la reproductibilité des performances diélectriques sur des films obtenus à partir des sols mixtes, selon l'exemple ci-dessus, 4 essais ont été effectués à partir de 4 sols préparés selon le procédé décrit, selon les mêmes conditions opératoires conformément aux exemples 1 et 2. Les films obtenus résultent d'un empilement de trois couches déposées sur plaque de silicium.

Les résultats sont consignés dans le tableau ci-dessous.

| Numéro d'essais | Epaisseur du film (en nm) | Capacité (nF/mm²) à 0V/1kHz | Constante diélectrique A 0V/1kHz |
|---|---|---|---|
| 1 | 195 | 37.2 | 816 |
| 2 | 195 | 38.4 | 846 |
| 3 | 190 | 36.9 | 813 |
| 4 | 195 | 37.3 | 821 |

On constate, au vu de ces résultats, que les épaisseurs de films obtenus dans les mêmes conditions de dépôt de sols préparés de la même façon sont similaires pour ces 4 essais, et que les performances diélectriques sont très comparables. De ce fait, ce procédé, en raison de sa reproductibilité, est totalement compatible avec un procédé industriel de fabrication de composants électroniques par exemple.

### Références citées

[1] : Integrated Ferroelectrics, 26, 1999, pp. 225-241.
[2] : Journal of sol-gel science and technology, 2, 1994, pp.605-609.
[3] : J.Mater.Res.,1996,11, N°10, pp.2556-2564.
[4] : J.Mater.Res., 1999, 14, N°5, pp.1852-1859.
[5] : Journal of sol-gel science and technology, 2000, 19, pp. 671-676.
[6] : J. Mater. Sci., 1995, 30, pp. 2507-2516.
[7] : WO9013149 A1 (Univ. Kingston (CA)), 1990

## Revendications

1. Procédé de préparation d'un sol de zircono-titanate de plomb, dit PZT de formule PbZrₓTi₍₁₋ₓ₎O₃ avec 0,45≤x≤0,7 comprenant successivement les étapes suivantes :
a) préparer un sol concentré dans un diol, ledit sol comprenant un précurseur à base de titane, un précurseur à base de zirconium et un précurseur à base de plomb ;
b) placer ledit sol concentré à température ambiante sans agitation, pendant une durée allant de 1 à 5 semaines pour obtenir une stabilisation de la viscosité dudit sol, c'est-à-dire, jusqu'à obtention d'un sol présentant une viscosité constante en fonction du temps ;
c) une fois la stabilisation de la viscosité du sol observée, diluer le sol obtenu en b) par un solvant compatible avec le diol utilisé dans l'étape a), lequel solvant compatible est identique au diol utilisé dans l'étape a).

2. Procédé de préparation selon la revendication 1, **caractérisé en ce que** le sol concentré de l'étape a) a une concentration allant de 20 à 40 % en équivalent massique PZT.

3. Procédé de préparation selon la revendication 2, **caractérisé en ce que** le sol concentré de l'étape a) a une concentration de 26 % en équivalent massique PZT.

4. Procédé de préparation selon l'une quelconque des revendications 1 à 3, **caractérisé en ce que** le diol est un alkylène glycol, avec un nombre d'atomes de carbone allant de 2 à 5.

5. Procédé de préparation selon la revendication 4, **caractérisé en ce que** le diol est l'éthylène glycol.

6. Procédé de préparation selon l'une quelconque des revendications précédentes, **caractérisé en ce que** le précurseur à base de plomb est choisi parmi les sels organiques de plomb tels que les acétates, les sels minéraux de plomb tels que les chlorures, les composés organométalliques du plomb tels que les alcoolates comportant un nombre d'atomes de carbones allant de 1 à 4.

7. Procédé de préparation selon la revendication 6, **caractérisé en ce que** le précurseur à base de plomb est l'acétate de plomb trihydraté.

8. Procédé de préparation selon l'une quelconque des revendications 1 à 7, **caractérisé en ce que** le précurseur à base de titane est un alcoxyde de titane.

9. Procédé de préparation selon la revendication 8, **caractérisé en ce que** le précurseur à base de titane est l'isopropoxyde de titane.

10. Procédé de préparation selon l'une quelconque des revendications 1 à 9, **caractérisé en ce que** le précurseur à base de zirconium est un alcoxyde de zirconium.

11. Procédé de préparation selon la revendication 10, **caractérisé en ce que** le précurseur à base de zirconium est le n-propoxyde de zirconium.

12. Procédé de préparation d'un film de zircono-titanate de plomb, (dit PZT), de formule PbZrₓTi₍₁₋ₓ₎O₃ avec 0,45≤x≤0,7, ledit procédé comprenant successivement les étapes suivantes :
a) préparer un sol concentré dans un diol, ledit sol comprenant un précurseur à base de titane, un précurseur à base de zirconium et un précurseur à base de plomb ;
b) placer ledit sol concentré à température ambiante sans agitation, pendant une durée allant de 1 à 5 semaines pour obtenir une stabilisation de la viscosité dudit sol, c'est-à-dire, jusqu'à obtention d'un sol présentant une viscosité constante en fonction du temps ;
c) une fois la stabilisation de la viscosité du sol observée, diluer le sol obtenu en b) par un solvant compatible avec le diol utilisé dans l'étape a), lequel solvant compatible est identique au diol utilisé dans l'étape a) ;
d) une étape de dépôt d' au moins une couche sur un substrat du sol obtenu à l'issue de l'étape c) ;
e) une étape de séchage de la, au moins, une couche pendant une durée et une température efficaces pour permettre une gélification du sol ;
f) une étape de calcination de la, au moins, une couche à une température et une durée efficaces pour éliminer des produits organiques issus de la préparation du sol ;
g) une étape de recuit à une température et une durée efficace pour aboutir à une densification de la au moins une couche.

13. Procédé de préparation selon la revendication 12, caractérisé en ce le dépôt s'effectue par trempage-retrait.

14. Procédé de préparation selon la revendication 12, **caractérisé en ce que** le dépôt s'effectue par enduction centrifuge.

15. Procédé de préparation selon l'une quelconque des revendications 12 à 14, **caractérisé en ce que** le substrat est une tranche de silicium.

16. Procédé de préparation selon l'une quelconque des revendications 12 à 15, **caractérisé en ce que** l'étape de calcination est effectuée à une température allant de 300 à 500 °C, pour une durée allant de 2 à 15 minutes.

17. Procédé de préparation selon l'une quelconque des revendications 12 à 16, **caractérisé en ce que** l'étape de recuit est effectuée à une température allant de 600 à 800°C, pour une durée allant de 1 à 5 minutes.

## Patentansprüche

1. Verfahren zur Herstellung eines Sols von Blei-Zirkonat-Titanat, genannt PZT, der Formel PbZrₓTi₍₁₋ₓ₎O₃ mit 0,45≤x≤0,7, umfassend nacheinander die folgenden Schritte:
a) Herstellen eines konzentrierten Sols in einem Diol, wobei das Sol einen Präkursor auf Titanbasis, einen Präkursor auf Zirkonbasis und einen Präkursor auf Bleibasis umfasst;
b) Bringen des konzentrierten Sols auf Umgebungstemperatur ohne Schütteln während einer Dauer zwischen 1 und 5 Wochen, um eine Stabilisierung der Viskosität des Sols zu erzielen, d. h. bis zur Erlangung eines Sols, das eine konstante Viskosität als Funktion der Zeit aufweist;
c) sobald die Stabilisierung der Viskosität des Sols beobachtet wird, Verdünnen des in b) erhaltenen Sols mit einem Lösungsmittel, das mit dem im Schritt a) verwendeten Diol verträglich ist, wobei das verträgliche Lösungsmittel mit dem im Schritt a) verwendeten Diol identisch ist.

2. Verfahren zur Herstellung nach Anspruch 1, **dadurch gekennzeichnet, dass** das konzentrierte Sol im Schritt a) eine Konzentration von 20 bis 40 % in Massenequivalent PZT hat.

3. Verfahren zur Herstellung nach Anspruch 2, **dadurch gekennzeichnet, dass** das konzentrierte Sol im Schritt a) eine Konzentration von 26 % in Massenequivalent PZT hat.

4. Verfahren zur Herstellung nach einem der Ansprüche 1 bis 3, **dadurch gekennzeichnet, dass** das Diol ein Alkylenglykol mit einer Anzahl von Kohlenstoffatomen von 2 bis 5 ist.

5. Verfahren zur Herstellung nach Anspruch 4, **dadurch gekennzeichnet, dass** das Diol Ethylenglykol ist.

6. Verfahren zur Herstellung nach einem der vorhergehenden Ansprüche, **dadurch gekennzeichnet, dass** der Präkursor auf Bleibasis ausgewählt ist aus den organischen Bleisalzen wie z. B. den Acetaten, den mineralischen Bleisalzen wie z. B. den Chloriden, den organometallischen Bleiverbindungen wie z. B. den Alkoholaten, umfassend eine Zahl von Kohlenstoffatomen von 1 bis 4.

7. Verfahren zur Herstellung nach Anspruch 6, **dadurch gekennzeichnet, dass** der Präkursor auf Bleibasis Bleiacetat-Trihydrat ist.

8. Verfahren zur Herstellung nach einem der Ansprüche 1 bis 7, **dadurch gekennzeichnet, dass** der Präkursor auf Titanbasis ein Titan-Alkoxid ist.

9. Verfahren zur Herstellung nach Anspruch 8, **dadurch gekennzeichnet, dass** der Präkursor auf Titanbasis Titan-Isopropoxid ist.

10. Verfahren zur Herstellung nach einem der Ansprüche 1 bis 9, **dadurch gekennzeichnet, dass** der Präkursor auf Zirkonbasis ein Zirkon-Alkoxid ist.

11. Verfahren zur Herstellung nach Anspruch 10, **dadurch gekennzeichnet, dass** der Präkursor auf Zirkonbasis n-Zirkonpropoxid ist.

12. Verfahren zur Herstellung eines Films aus Blei-Zirkonat-Titanat (genannt PZT) der Formel PbZrₓTi₍₁₋ₓ₎O₃ mit 0,45≤x≤0,7, wobei das Verfahren nacheinander die folgenden Schritte umfasst:
a) Herstellen eines konzentrierten Sols in einem Diol, wobei das Sol einen Präkursor auf Titanbasis, einen Präkursor auf Zirkonbasis und einen Präkursor auf Bleibasis umfasst;
b) Bringen des konzentrierten Sols auf Umgebungstemperatur ohne Schütteln während einer Dauer zwischen 1 und 5 Wochen, um eine Stabilisierung der Viskosität des Sols zu erzielen, d. h. bis zur Erlangung eines Sols, das eine konstante Viskosität als Funktion der Zeit aufweist;
c) sobald die Stabilisierung der Viskosität des Sols beobachtet wird, Verdünnen des in b) erhaltenen Sols mit einem Lösungsmittel, das mit dem im Schritt a) verwendeten Diol verträglich ist, wobei das verträgliche Lösungsmittel mit dem im Schritt a) verwendeten Diol identisch ist;
d) einen Schritt des Aufbringens wenigstens einer Schicht des am Ende des Schritts c) erhaltenen Sols auf ein Substrat;
e) einen Schritt des Trocknens der wenigstens einen Schicht während einer Dauer und einer Temperatur, die wirksam sind, um eine Gelierung des Sols zu ermöglichen;
f) einen Schritt der Kalzinierung der wenigstens einen Schicht bei einer Temperatur und einer Dauer, die wirksam sind, um organische Produkte zu beseitigen, die aus der Herstellung des Sols hervorgegangen sind;
g) einen Schritt des Aufheizens bei einer Temperatur und einer Dauer, die wirksam sind, um zu einer Verdichtung der wenigstens einen Schicht zu führen.

13. Verfahren zur Herstellung nach Anspruch 12, **dadurch gekennzeichnet, dass** das Aufbringen durch Tauchziehen erfolgt.

14. Verfahren zur Herstellung nach Anspruch 12, **dadurch gekennzeichnet, dass** das Aufbringen durch Zentrifugenbeschichtung erfolgt.

15. Verfahren zur Herstellung nach einem der Ansprüche 12 bis 14, **dadurch gekennzeichnet, dass** das Substrat eine Siliziumscheibe ist.

16. Verfahren zur Herstellung nach einem der Ansprüche 12 bis 15, **dadurch gekennzeichnet, dass** der Schritt der Kalzinierung bei einer Temperatur von 300 bis 500 °C während einer Dauer von 2 bis 15 Minuten ausgeführt wird.

17. Verfahren zur Herstellung nach einem der Ansprüche 12 bis 16, **dadurch gekennzeichnet, dass** der Schritt des Aufheizens bei einer Temperatur von 600 bis 800 °C während einer Dauer von 1 bis 5 Minuten ausgeführt wird.

## Claims

1. Method of preparation of a sol of lead zircon titanate, termed PZT, of formula PbZrₓTi₍₁₋ₓ₎O₃ with 0.45 ≤ x ≤ 0.7, comprising successively the following steps:
(a) preparing a concentrated sol in a diol, the said sol comprising a titanium-based precursor, a zirconium-based precursor, and a lead-based precursor;
(b) placing the said concentrated sol at ambient temperature without agitation for a duration of 1-5 weeks for obtaining a stabilization of the viscosity of said sol, i.e., until a sol is obtained having a constant viscosity as a function of time;
(c) once obtained the stabilization of the viscosity of the sol, diluting the sol obtained in (b) with a solvent compatible with the diol used in step (a), said compatible solvent being identical to the diol used in step a).

2. Method of preparation according to claim 1, **characterized in that** the concentrated sol of step (a) has a concentration from 20 to 40% PZT equivalent per unit mass.

3. Method of preparation according to claim 2, **characterized in that** the concentrated sol of step (a) has a concentration of 26% PZT equivalent per unit mass.

4. Method of preparation according to any one of claims 1-3, **characterized in that** the diol is an alkylene glycol with 2-5 carbon atoms.

5. Method of preparation according to claim 4, **characterized in that** the diol is ethylene glycol.

6. Method of preparation according to any one of the foregoing claims, **characterized in that** the lead-based precursor is chosen from among organic lead salts such as acetates, mineral lead salts such as chlorides, and organometallic lead compounds such as alcoholates comprising 1-4 carbon atoms.

7. Method of preparation according to claim 6, **characterized in that** the lead-based precursor is lead acetate trihydrate.

8. Method of preparation according to any one of claims 1-7, **characterized in that** the titanium-based precursor is a titanium alkoxide.

9. Method of preparation according to claim 8, **characterized in that** the titanium-based precursor is titanium isopropoxide.

10. Method of preparation according to any one of claims 1-9, **characterized in that** the zirconium-based precursor is a zirconium alkoxide.

11. Method of preparation according to claim 10, **characterized in that** the zirconium-based precursor is zirconium n-propoxide.

12. Method of preparation of films of lead zircon titanate (known as PZT), of formula PbZrₓTi₍₁₋ₓ₎O₃ with 0.45 ≤ x ≤ 0.7, the said method successively comprising the following steps:
(a) preparing a concentrated sol in a diol, the said sol comprising a titanium-based precursor, a zirconium-based precursor, and a lead-based precursor;
(b) placing the said concentrated sol at ambient temperature without agitation for a duration of 1-5 weeks for obtaining a stabilization of the viscosity of said sol, i.e., until a sol is obtained having a constant viscosity as a function of time;
(c) once obtained the stabilization of the viscosity of the sol, diluting the sol obtained in (b) with a solvent compatible with the diol used in step (a), said compatible solvent being identical to the diol used in step a);
(d) a step of deposition of at least one layer on a substrate of the sol obtained at the end of step c) ;
(e) a step of drying of the at least one layer for a period and at a temperature effective for permitting gelling of the sol;
(f) a step of calcination of the at least one layer at a temperature and for a time effective for eliminating organic products arising from the preparation of the sol;
(g) a step of annealing at a temperature and for a time effective for attaining a densification of the at least one layer.

13. Method of preparation according to claim 12, **characterized in that** the deposition is effected by dip-coating.

14. Method of preparation according to claim 12, **characterized in that** the deposition is effected by spin-coating.

15. Method of preparation according to any one of claims 12-14, **characterized in that** the substrate is a silicon wafer.

16. Method of preparation according to any one of claims 12-15, **characterized in that** the calcination step is carried out at a temperature from 300 to 500°C, for a period from 2 to 15 minutes.

17. Method of preparation according to any one of claims 12-16, **characterized in that** the annealing step is carried out at a temperature of 600 to 800°C, for a period from 1 to 5 minutes.
